# EUROPEAN PATENT APPLICATION

(11) **EP 4 722 031 A1**
(43) Date of publication of application: **08.04.2026**
(21) Application number: 24306644.6
(22) Date of filing: 07.10.2024
(51) Int. Cl.: B60N 2/02

(54) **SEAT CUSHION FOR A SEAT, IN PARTICULAR A VEHICLE SEAT, AND SEAT, IN PARTICULAR VEHICLE SEAT**

(71) Applicant: Renault SAS, 92100 Boulogne Billancourt (FR); Adient US LLC, Plymouth, MI 48170 (US)
(72) Inventor: LEMONNIER, Matthieu, 78288 Guyancourt (FR); DUKARKIS, Johann, 78280 Guyancourt (FR); NGUYEN, Cedric, 93500 Pantin (FR); MARSAUD, Brice, 91130 Longpont sur Orge (FR)
(74) Representative: Jacobacci & Partners France

(57) **Abstract**

The invention refers to a seat cushion (300) for a seat (100), in particular a vehicle seat (100), having at least a seating region (310) and a lateral support region (320) adjacent to the seating region (310), wherein a control device (2000) for activation of seat controls (410 to 430) is provided in an area of the lateral support region (320) and comprising at least one actuation element (2100) which actuating direction (2102) is orientated perpendicularly to a seating surface (340) facing an occupant. The invention further refers to a seat (100).

## Description

### TECHNICAL FIELD OF THE INVENTION

The invention relates to a seat cushion for a seat, in particular a vehicle seat, comprising at least a seating region and a lateral support region adjacent the seating region and a control device for activation of seat controls. Further, the invention relates to a seat, in particular a vehicle seat, with such a seat cushion.

### BACKGROUND INFORMATION AND PRIOR ART

Currently, seat control devices may be used to control seat adjustment devices or mechanisms for setting the position and/or orientation of a vehicle seat. These seat controls may be placed along the outboard side bolster region of the vehicle seat, but in such a case, a narrower vehicle seat is required to allow for enough clearance for seat controls between the seat and the vehicle door. For example, there must be enough room for a large hand to fit between the vehicle seat and the door panel to reach the seat controls.

Today's automotive seat controls are generally located on the side of the seat, completely invisible to an occupant. Commonly, there is little room for a hand to pass between the seat and the door panel; whether for mechanically or electrically adjustable seats. The integration of the controls generates a large number of components and plastic parts, which is visually polluting for the driver, while increasing the mass/CO2/economic impact linked to the number of components produced. Other solutions include remote controls on the door panel or central display, but positioning these outside the seat is often considered unintuitive, and involves additional wiring complexities.

A 3D touch control-based automobile seat adjustment switch placed along the outboard side bolster region is known from EP 4 105 071 A1.

### OBJECT OF THE INVENTION

It is an object of the present invention to provide an improved seat cushion with a seat control device which does not limit the size of the vehicle or vehicle seat and is easily accessible to an occupant, in particular a driver. Further, it is an object of the present invention to provide an improved seat, in particular vehicle seat.

### ACHIEVEMENT OF OBJECTIVES

The object is achieved by a seat cushion for a seat, in particular for a vehicle seat, according to claim 1 and by a seat, in particular vehicle seat, according to claim 13.

Preferred embodiments of the invention are given in the dependent claims.

The seat cushion for a seat, in particular a vehicle seat, comprises at least a seating region and a lateral support region adjacent to the seating region, wherein a control device, in particular a seat control device, for activation of seat controls is provided in an area of the lateral support region and comprising at least one actuation element which actuating direction is orientated perpendicularly to a seating surface facing an occupant. For example, the actuating direction is oriented perpendicularly to a top support surface of the lateral support region facing an occupant. For example, the actuation element is actuatable from above in a direction of the seating surface.

Compared to conventional control devices which are located on a hardshell trim cover on an outboard facing side of the seat, the control device according to the invention is located in the driver's field of vision and therefore is easier to operate.

To provide an intuitive and easy-to-reach control device for an occupant of the seat, the actuation direction is orientated perpendicularly to a direction of extension, in particular longitudinal extension of the top support surface. An actuation surface of the actuation element may be arranged aligned, for example arranged parallel, to the extension direction of the top support surface. The control device may be integrated into the seat cushion with reduced components leading to cost reduction, optimization of use of vehicle space and ergonomic use.

The fact that the seat control device is provided in an area of the lateral support region and comprising at least one actuation element which actuating direction is orientated perpendicularly to a seating surface facing an occupant, allows visible operation for the occupant seated on the seat without the need to reach around the seat cushion and blindly operate seat controls.

The invention provides a visible positioning of the control device without effecting packaging constraints, for example a size of the seat cushion, the seat and/or a door panel in order to allow the occupant to effectively operate seat controls such as seat adjustment devices, in particular seat adjustment mechanisms. Consequently, the control device, in particular the actuation element, is easy to reach and/or to see. The seat cushion provides a control device which does not limit the size of the vehicle or vehicle seat and impact a seat design and which is accessible to the occupant. Especially for a driver, the operation of the control device according to the present invention may be improved. The control device, in particular the actuation element, may be visibly within the driver's field of vision.

The seat cushion according to the present invention may offer a seat control operation within reach of a driver's hand without lifting the shoulders from the backrest and keeping one hand on the steering wheel.

The control device may be configured as a switch pack or switch assembly. In particular, the control device may be configured as a pre-assembled switch pack or switch assembly. This allows an easy installation of the control device in a foam element of the seat cushion.

The lateral support region may comprise at least a cavity to accommodate the control device. The top support surface may comprise a recess adjoining the cavity to accommodate the actuation element.

The lateral support region may be a bolster, such as a side bolster, of the seat cushion. The seat cushion may be made of foam. The seat cushion may comprise a foam element having a first foam part forming the seating region and a second foam part forming the lateral support region. The first and second foam parts may be a one-piece part. The first and second foam parts may be formed from injection molding.

The actuation element may be arranged in the recess such that an actuation surface of the actuation element is located below, for example vertically offset to the top support surface of the lateral support region. The actuation surface may be arranged vertically offset and parallel to the top support surface. Alternatively, the actuation surface may be arranged flush with the top support surface of the lateral support region.

The control device may comprise at least a switch box with at least a fastening section to fasten the control device to a frame structure of the vehicle seat. The switch box may enclose at least a spring element for support, in particular spring support or bias the actuation element. The switch box may enclose a switch coupled to the actuation element, contactor elements and/or other mechanical elements and/or electronics. The switch box may comprise at least one interface coupling the control device to seat adjustment mechanisms of the seat.

The switch box may comprise a cap with at least one opening to movably guide the actuation element, wherein the actuation element protrudes from the opening of the cap. The opening may comprise an open guide rod or guide ring which axially supports the actuation element in its actuating direction. The guide rod or guide ring may support the actuation element when arranged in the recess of the lateral support region.

The actuation element, such as a switch or button, with mechanical movement and a contactor kept under the cap and under a layer of foam of the lateral support region, allows a soft feel to touch and a good feel for trigger point of the control device. Further, this arrangement avoids involuntary pressure.

The actuation element may be a mechanical button. The actuation element may be a spring-loaded pushbutton. The actuation element may be an actuatable switch.

The control device may comprise at least a backlighting device for illumination of the actuation element. The backlighting device may be a LED backlight.

The actuation element may comprise at least a transparent or translucent actuation surface. The backlit actuation element may improve the design of the seat cushion and the seat.

The seat cushion may comprise at least a seat cover covering at least the lateral support region and the actuation element. The cover may be a trim. The cover may be made of fabric and/or textile covering the whole seat cushion, that means the seating region and the lateral support region.

The control device may be integrated in the seat cushion. In particular, the control device may be configured as an under-cover-control device.

The cover may comprise at least one perforated and/or embossed indicating area aligning with the actuation element when covering the lateral support region. The indicating area may be backlit. The indicating area may comprise a seat icon, for example indicating an adjustable seat part assigned to the actuation element. The cover may be embossed or without embossing, backlit or not backlit, a printing or transfer of pictogram position, a flat surface and/or an embroidery.

The control device may comprise at least three actuation elements each actuatable by a double tap or a single tap to activate seat controls. The actuation elements may be arranged in-line and/or parallel to each other along the extension direction of the top support surface.

The seat, in particular vehicle seat, according to the present invention comprises at least a seat pan and a backrest, wherein at least the seat pan is provided with a seat cushion according to any of the features described above. The seat may comprise a seat pan with a seat pan frame structure and a seat cushion having at least a seating region and a lateral support region adjacent to the seating region, wherein a control device, in particular a seat control device, for activation of seat controls is provided in an area of the lateral support region and comprising at least one actuation element which actuating direction is orientated perpendicularly to a seating surface facing an occupant, in particular to a top support surface of the lateral support region facing an occupant. The invention provides a visible positioning of the control device without effecting packaging constraints, for example a size of the seat cushion, the seat and/or a door panel in order to allow the occupant to effectively operate seat controls such as seat adjustment mechanisms. Consequently, the control device, in particular the actuation element, is easy to reach and/or to see. The seat cushion provides a control device which does not limit the size of the vehicle or vehicle seat and impact a seat design and which is accessible to the occupant. Especially for a driver, the operation of the control device according to the present invention may be improved. The control device, in particular the actuation element, may be visibly within the driver's field of vision.

The control device provided in the seat cushion may comprise at least a number of actuation elements to activate seat controls from at least one of a backrest adjustment mechanism, such as a recliner adjustment, a height adjustment mechanism and/or a slide adjustment mechanism, such as a longitudinal adjustment, a temperature control unit and/or massage unit of the seat.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### DETAILED DESCRIPTION OF EXAMPLE(S)

The present invention will become more fully understood from the detailed description given herein below and the accompanying drawings which are given by way of illustration only, and thus, are not limitative of the present invention, and wherein:
Figure 1 shows a seat, in particular a vehicle seat, comprising at least a seat pan, a backrest and seat adjustment mechanisms,
Figure 2 shows a perspective view of a seat cushion according to the invention with a control device for activation of seat controls,
Figure 3 shows a side view of the control device according to figure 2,
Figure 4 shows schematically a cover of the seat cushion,
Figure 5 shows a perspective view of a seat according to the invention having at least a seat pan and a control device for activation of seat controls,
Figure 6 shows schematically a sectional view of the seat having at least a seat pan and a control device for activation of seat controls, and
Figure 7 shows schematically an operation diagram of the control device.

Corresponding parts are marked with the same reference symbols in all figures.

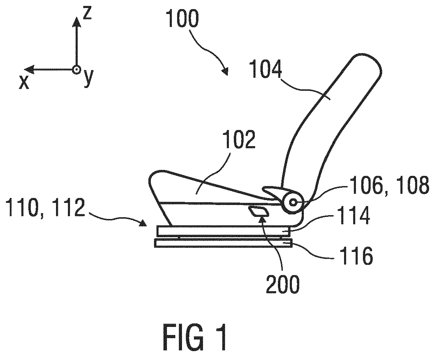

A vehicle seat 100 shown schematically in figure 1 relating to the prior art is described below using three spatial axes or directions extending perpendicularly to one another. A longitudinal axis x runs horizontally and preferably parallel to a longitudinal direction of a vehicle with a vehicle seat 100 installed in the vehicle. The longitudinal direction corresponds to the usual direction of travel of the vehicle. A transverse axis y is also horizontally oriented in the vehicle extending perpendicular to the longitudinal direction and extends parallel to a transverse direction of the vehicle. A vertical axis z runs perpendicular to the longitudinal direction and perpendicular to the transverse direction. In the case of a vehicle seat 100 installed in the vehicle, the vertical axis z preferably runs parallel to a vehicle height direction.

The positional indications and directional indications used, such as front, rear, top and bottom, refer to a viewing direction of an occupant sitting in the vehicle seat 100 in an upright seating position, such as a normal sitting position, wherein the vehicle seat 100 being installed in the vehicle, in a position of use suitable for passenger transport with an upright backrest 104 and the vehicle seat 100 being oriented in the direction of travel as usual. However, the vehicle seat 100 may also be installed or moved in a deviating orientation, for example transverse to the direction of travel. Unless otherwise described, the vehicle seat 100 is constructed in mirror symmetry with respect to a plane perpendicular to the transverse direction y.

The backrest 104 may be pivotally disposed on a seat pan 102 of the vehicle seat 100. For this purpose, the vehicle seat 100 may optionally comprise a fitting device 106, also referred to as a recliner and backrest adjustment device 106, in particular an adjustment fitting, pivot fitting, detent fitting or wobble fitting.

The positional indications and directional indications used, such as radial, axial and circumferential, refer to an axis of rotation 108 of the fitting device 106. Radial means perpendicular to the axis of rotation 108; axial means in the direction of or parallel to the axis of rotation 108.

The vehicle seat 100 may optionally comprise a longitudinal adjustment device 110, also referred to as slide adjustment device 110. For example, the longitudinal adjustment device 110 includes a track assembly 112 having a first track element 114 and a second track element 116. The first track element 114 is adjustable relative to the second track element 116 in a longitudinal direction. The first track element 114 is attached to the seat pan 102. The second track element 116 is attached to a structural element of a vehicle, for example a vehicle floor.

For clarity, the first track element 114 can be referred to as the upper track 114. This upper track 114 (also referred to as a running rail or carriage) is associated with the vehicle seat 100 and is adapted to support the vehicle seat 100. The second track element 116 can be referred to as the lower track 116. The lower track 116 is fixed and connected, for example, to the floor of a vehicle.

According to the prior art, a seat control device 200 used to control the seat adjustment devices, such as the fitting device 106 and/or the longitudinal adjustment device 110, for setting the position and/or orientation of the seat 100, is placed along an outboard of the seat 100. There continues to be a need for a seat control device 2000 with actuation elements 2100 which do not limit the size of the vehicle or vehicle seat 100, is accessible and visible to an occupant seated on the seat (100).

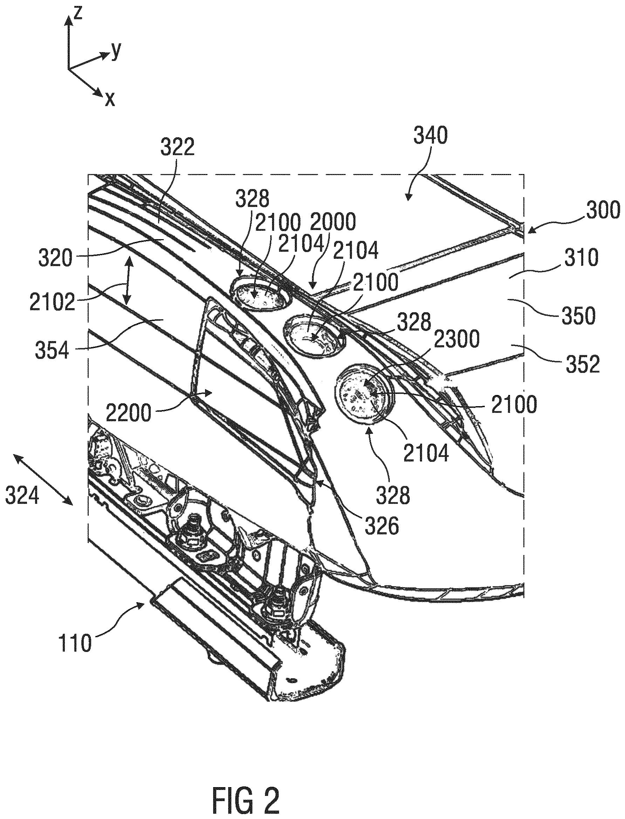

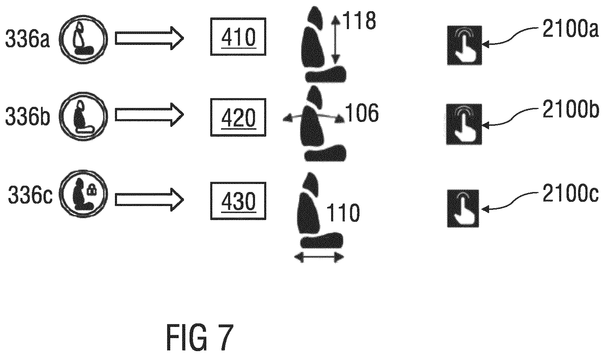

Figure 2 shows a perspective view of a seat cushion 300 according to the invention with a control device 2000 for activation of seat controls 410 to 430 (shown in figure 7) assigned to a backrest recliner device 106, a longitudinal adjustment device 110 and a height adjustment device 118. Optionally additionally there may be more not shown seat controls for different devices, such as a seat temperature device and/or massage device.

The seat cushion 300 comprises at least a seating region 310 and a lateral support region 320 adjacent to the seating region 310 and a control device 2000, in particular a seat control device 2000, for activation of seat controls 410 to 430. The seat cushion 300 comprises at least one foam element 350. The foam element 350 comprises the seating region 310 and the lateral support region 320. The foam element 350 can comprise one lateral support region 310 on each side of the seating region 320. The lateral support region 320 may extend above a seating surface 340 of the seating region 310 in z-direction. The lateral support region 320 is forming a side support bolster. The foam element 350 can comprise a first foam part 352 forming the seating region 310. The foam element 350 can comprise a second foam part 354 forming a first lateral support region 320. The foam element 350 can comprise a third foam part 354 forming a second lateral support region 320 (not shown). The foam element 350 may be provided with a seat cover 330, such as a textile and/or fabric cover. An outboard facing side of the lateral support regions 320 may be additionally covered by a trim shell cover.

The control device 2000 is provided in an area of the lateral support region 320. The control device 2000 may be integrated and embedded in a foam of the lateral support region 320. The seat cushion 300 may be made of any sort of foam material.

The control device 2000 comprises at least one actuation element 2100 for activation of an assigned seat control 410 to 430 when actuated. In the shown embodiment, the control device 2000 comprises three actuation elements 2100 arranged in a row on behind another. The actuation elements 2100 are each extending and actuatable, for example by pushing, pressing or tapping, in a vertical direction with respect to a longitudinal extension direction 324 of the lateral support region 320. The lateral support region 320 may be a so-called bolster or side bolster. The seat cushion 300 may comprise two lateral support regions 320 on each adjacent side of the seating region 310.

Each actuating direction 2102 of the actuation elements 2100 is orientated perpendicularly to a top support surface 322 of the lateral support region 320 facing an occupant. In particular, each actuation element 2100 is operable from top to bottom (in z-direction). Each actuating direction 2102 is orientated perpendicularly to the seating surface 340 facing an occupant.

To provide an intuitive and easy-to-reach control device 2000 for an occupant of the seat 100, each actuation direction 2102 is orientated perpendicularly to a direction of extension, in particular longitudinal extension direction 324 of the top support surface 322. An actuation surface 2104 of each actuation element 2100 is arranged aligned, for example arranged parallel, to the extension direction 324 of the top support surface 322. The seat cushion 300 according to the present invention may offer a seat control operation within reach of a driver's hand without lifting the shoulders from the backrest 104 and keeping one hand on the steering wheel.

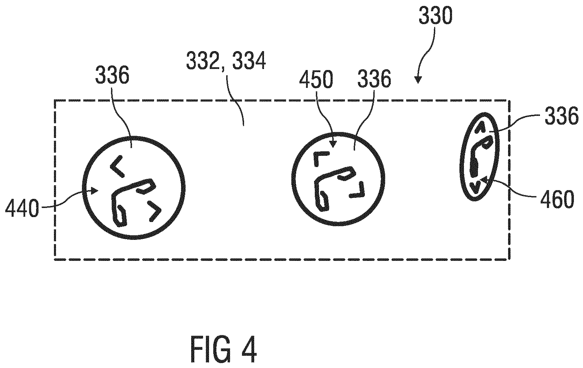

The lateral support region 320 comprises a cavity 326 to accommodate the control device 2000. The top support surface 322 comprises three recesses 328 adjoining the cavity 326 to accommodate one of the actuation elements 2100. Each actuation element 2100 is arranged in the corresponding recess 328 such that the respective actuation surface 2104 of the actuation element 2100 is located below, for example vertically offset to the top support surface 322 of the lateral support region 320. Alternatively, each actuation element 2100 is arranged in the corresponding recess 328 such that the respective actuation surface 2104 of the actuation element 2100 is located flush with the top support surface 322 of the lateral support region 320. Each actuation element 2100 is kept in and/or below a top layer of foam of the lateral support region 320, in particular in the area of the top support surface 322, to allow a soft feel to touch of the seat cushion 300 and a good feel for trigger point of the control device 2000. Further, this arrangement avoids involuntary pressure. The lateral support region 320 so as the control device 2000 may be covered by a cover 330, such as a trim or trim cover, as shown in figure 4. The control device 2000, in particular the actuation elements 2100, may be hidden from a user's view.

The control device 2000 comprises at least one switch box 2200 housing or enclosing mechanical features and/or electronics for operation of the control device 2000.

Each actuation element 2100 may be a mechanical button. Each actuation element 2100 is movably supported in or on the switch box 2200 in the actuating direction 2102.

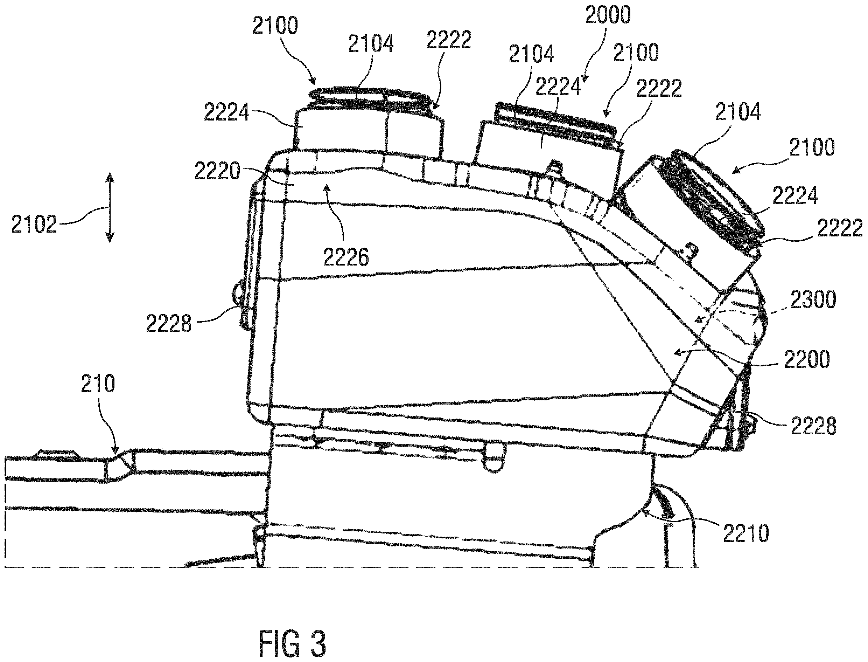

The control device 2000 comprises at least a backlighting device 2300 (shown in figure 3) for illumination of the actuation elements 2100. The backlighting device 2300 may be a LED backlight. The backlighting device 2300 can be housed in the switch box 2200.

Each actuation element 2100 may be made of a transparent or translucent material. Each actuation element 2100 can comprise at least a transparent or translucent actuation surface 2104. The actuation element 2100 can comprise a translucent or transparent material at least in an area of the actuation surface 2104. The backlit actuation elements 2100 may improve the design of the seat cushion 300 and the seat 100.

Figure 3 shows a side view of the control device 2000 according to figure 2.

The control device 2000 may be configured as a switch pack or switch assembly. The control device 2000 comprises at least a switch box 2200 with at least a fastening section 2210 to fasten the control device 2000 to a frame structure 210 of the vehicle seat 100. The seat cushion 300 may be commonly arranged on and mounted to the frame structure 210. The control device 2000 can be a pre-assembled module comprising the switch box 2200, a number of movable actuation elements 2100, electronics and the fastening section 2210.

The switch box 2200 comprises a cap 2220 with at least one opening 2222 to movably guide one actuation element 2100. In the shown embodiment, the control device 2000 comprises three actuation elements 2100 and thus, the cap 2220 comprises three openings 2222. Each actuation element 2100 partially protrudes from the respective opening 2222 of the cap 2220. The openings 2222 are provided on a side opposite the fastening section 2210. Each opening 2222 may comprise a collar 2224, for example in the shape of an open guide rod or guide ring, to axially support a respective actuation element 2100 in its actuating direction 2102. Each collar 2224 may support the actuation element 2100 when arranged in a respective recess 328 of the lateral support region 320.

The cap 2220 may be substantially U-shaped. The cap 2220 may comprise a top covering side 2226 and two side covering sides 2228 to attach the cap 2220 to the switch box 2200. The fastening section 2210 may be a bracket. The fastening section 2210 may be a L-shaped or U-shaped bracket.

Figure 4 shows schematically a cover 330 of the seat cushion 300.

The seat cushion 300 comprises a cover 330 covering at least the lateral support region 320 and the actuation elements 2100. The cover 330 may be a trim element. The cover 330 may be made from at least one fabric layer 332 and/or textile layer 334.

The cover 330 may comprise at least one perforated and/or embossed indicating area 336. According to the shown embodiment and the number of actuation elements 2100, the cover 330 is provided with an equal number of indicating areas 336. Each indicating area 336 is aligning with a respective actuation element 2100 when connected to the lateral support region 320. The indicating area 336 may be backlit, for example by means of perforation. The indicating area 336 may comprise a seat icon 440 to 460 indicating a respective seat element which seat control 410 to 430 may be activated by operating the actuation element 2100 assigned to the indicating area 336. The cover 330 may have embossed areas or areas without embossing. The cover 330 may be backlit or not backlit. The cover 330 may comprise a printing or transfer of pictogram position, a flat surface and/or an embroidery.

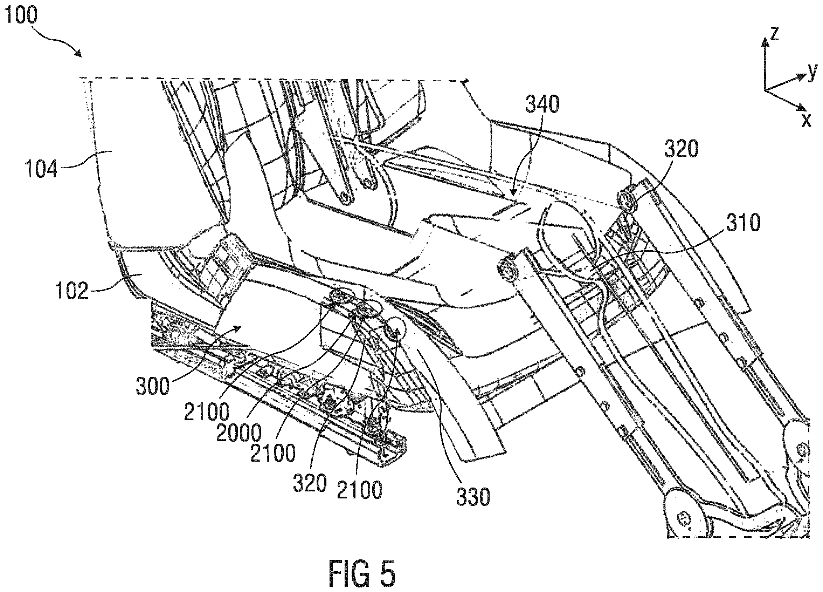

Figure 5 shows a perspective view of a seat 100 according to the invention having at least a seat pan 102, a backrest 104 and a control device 2000 for activation of seat controls 410 to 430. The control device 2000 is arranged hidden underneath the cover 330 covering the seat cushion 300. The control device 2000 is configured as an under-trim or under-cover switch pack or switch assembly. A position of each actuation element 2100 is indicated and/or highlighted by the cover 330.

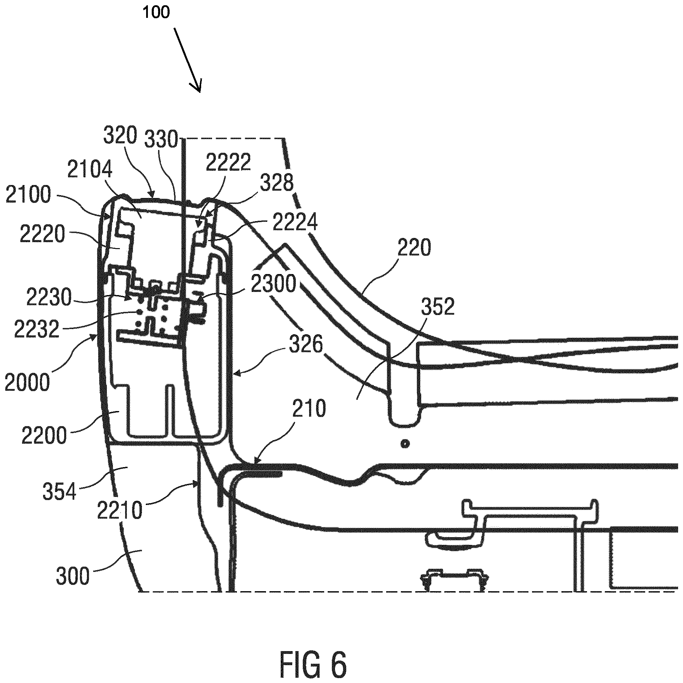

Figure 6 shows schematically a sectional view of the seat 100 having at least a seat pan 102 and a control device 2000 for activation of seat controls 410 to 430.

The control device 2000 may be configured as a switch pack or switch assembly. The control device 2000 comprises at least a switch box 2200 with at least a fastening section 2210 to fasten the control device 2000 to a frame structure 210 of the vehicle seat 100. The seat cushion 300 may be commonly arranged on and mounted to the frame structure 210.

The switch box 2200 comprises a cap 2220 with at least one opening 2222 to movably guide one actuation element 2100. In the shown embodiment, the control device 2000 comprises three actuation elements 2100 and thus, the cap 2220 comprises three openings 2222. Each actuation element 2100 partially protrudes from the respective opening 2222 of the cap 2220. The openings 2222 are provided on a side opposite the fastening section 2210. Each opening 2222 may comprise a collar 2224, for example in the shape of an open guide rod or guide ring, to axially support a respective actuation element 2100 in its actuating direction 2102. Each collar 2224 may support the actuation element 2100 when arranged in a respective recess 328 of the lateral support region 320.

The switch box 2200 may comprise at least a spring support device 2230 for support, in particular spring support or bias of each of the actuation elements 2100. The spring support device 2230 may comprise three spring elements 2232 each assigned to support one of the actuation elements 2100. The switch box 2200 may enclose not further shown switch elements, contactor elements and/or other mechanical elements and/or electronics. The switch box 2200 may comprise at least one not further shown interface coupling the control device 2000 to seat adjustment mechanisms of the seat 100.

A backlighting device 2300 may be arranged in the switch box 2200. The backlighting device 2300 can comprise a number of light emitting diodes (LEDs) arranged in the switch box 2200 in an area of and/or below the actuation elements 2100.

The line 220 indicates a mannequin, dummy or occupant.

The lateral support region 320, in particular the respective foam part 354, comprises a cavity 326 to accommodate the control device 2000. The top support surface 322, in particular a top of the foam part 354, comprises three recesses 328 adjoining the cavity 326 to accommodate one of the actuation elements 2100.

Figure 7 shows schematically an operation diagram of the control device 2000.

A first actuation element 2100a, connected to a first indicating area 336a of the cover 330, may be assigned to a height adjustment device 118. The first actuation element 2100a may be a double tap switch and actuated by double tapping. A second actuation element 2100b, connected to a second indicating area 336b of the cover 330, may be assigned to a backrest recliner device 106. The second actuation element 2100b may be a double tap switch and actuated by double tapping. A third actuation element 2100c, connected to a third indicating area 336c of the cover 330, may be assigned to a longitudinal adjustment device 110. The third actuation element 2100c may be a single tap switch and actuated by a single tap.

### LIST OF REFERENCES

100 vehicle seat, seat
102 seat pan
104 backrest
106 device
108 axis of rotation
110 adjustment device
112 track assembly
114 first track element (upper track)
116 second track element (lower track)
118 height adjustment device
200 control device
210 frame structure
220 line
300 seat cushion
310 seating region
320 support region
322 support surface
324 extension direction
326 cavity
328 recess
330 cover
332 fabric layer
334 textile layer
336 indicating area
336a first indicating area
336b second indicating area
336c third indicating area
340 seating surface
350 foam element
352, 354 foam part
410 to 430 seat control
440 to 460 seat icon
2000 control device
2100 actuation element
2100a first actuation element
2100b second actuation element
2100c third actuation element
2102 actuating direction
2104 actuation surface
2200 switch box
2210 fastening section
2220 cap
2222 opening
2224 collar
2226 to 2228 covering side
2230 spring support device
2232 spring element
2300 backlighting device
x longitudinal axis
y transverse axis
z vertical axis

## Claims

1. Seat cushion (300) for a seat (100), in particular a vehicle seat (100), having at least a seating region (310) and a lateral support region (320) adjacent to the seating region (310), wherein a control device (2000) for activation of seat controls (410 to 430) is provided in an area of the lateral support region (320) and comprising at least one actuation element (2100) which actuating direction (2102) is orientated perpendicularly to a seating surface (340) facing an occupant.

2. Seat cushion (300) according to claim 1, wherein the lateral support region (320) comprising at least a cavity (326) to accommodate the control device (2000) and a top support surface (322) facing the occupant and comprising a recess (328) adjoining the cavity (326) to accommodate the actuation element (2100).

3. Seat cushion (300) according to claim 2, wherein the actuation element (2100) is arranged in the recess (328) such that an actuation surface (2104) of the actuation element (2100) is located offset to or flush with the top support surface (322) of the lateral support region (320).

4. Seat cushion (300) according to any one of the claims 1 to 3, wherein the control device (2000) is a pre-assembled switch pack comprising at least a switch box (2200), the at least one actuation element (2100) and electronics and at least a fastening section (2210) to fasten the control device (2000) to a frame structure (210) of the seat (100).

5. Seat cushion (300) according to claim 4, wherein the switch box (2200) comprising a cap (2220) with at least one opening (2222) to movably guide the actuation element (2100), wherein the actuation element (2100) protrudes from the opening (2222) of the cap (2220).

6. Seat cushion (300) according to any one of the claims 1 to 5, wherein the actuation element (2100) is a switch or mechanical button.

7. Seat cushion (300) according to any one of the claims 1 to 6, wherein the control device (2000) comprising at least a backlighting device (2300) for illumination of the actuation element (2100).

8. Seat cushion (300) according to any one of the claims 1 to 7, wherein the actuation element (2100) comprising at least a transparent or translucent actuation surface (2104).

9. Seat cushion (300) according to any one of the claims 1 to 8, comprising at least a seat cover (330) covering at least the lateral support region (320) and the actuation element (2100).

10. Seat cushion (300) according to claim 9, wherein the cover (330) comprising at least one perforated and/or embossed indicating area (336) aligning with the actuation element (2100) when covering the lateral support region (320).

11. Seat cushion (300) according to any one of the claims 1 to 9, wherein the control device (2000) comprising at least three actuation elements (2100) each actuatable by a double tap or a single tap to activate seat controls (410 to 430).

12. Seat cushion (300) according to claim 11, wherein each actuation element (2100) is actuatable from above in a direction of the seating surface (340).

13. Seat (100), in particular vehicle seat (100), having at least a seat pan (102) and a backrest (104), wherein at least the seat pan (102) is provided with a seat cushion (300) according to any one of the preceding claims 1 to 12.

14. Seat (100) according to claim 13, wherein the control device (2000) provided in the seat cushion (300) comprising at least a number of actuation elements (2100) to activate seat controls (410 to 430) from at least one of a backrest adjustment device (106), a height adjustment device (118), a slide adjustment device (110), a temperature control unit and/or a massage unit of the seat (100).
